# FASCICULE DE BREVET EUROPEEN

(11) **EP 4 237 315 B1**
(45) Date de publication et mention de la délivrance du brevet: **29.10.2025**
(21) Numéro de dépôt: 21783511.5
(22) Date de dépôt: 28.09.2021
(51) Int. Cl.: B62D 25/08, B62D 29/00, B62D 27/06

(54) **TRAIN AVANT DE VÉHICULE AUTOMOBILE COMPRENANT UNE TRAVERSE S'ÉTENDANT ENTRE DEUX COUPELLES D'AMORTISSEURS**
VORDERRADANTRIEB EINES KRAFTFAHRZEUGES MIT EINEM QUERTRÄGER, DER SICH ZWISCHEN ZWEI STOSSDÄMPFERSCHALEN ERSTRECKT
MOTOR VEHICLE FRONT DRIVE TRAIN COMPRISING A CROSS-MEMBER EXTENDING BETWEEN TWO SHOCK-ABSORBER CUPS

(30) Priorité: 28.10.2020 FR 2011018
(43) Date de publication de la demande: 06.09.2023
(73) Titulaire: Ampere SAS, 92100 Boulogne-Billancourt (FR); NISSAN MOTOR CO., LTD., Kanagawa 221-0023 (JP)
(72) Inventeur: CARRIE, Julien, 78084 Guyancourt cedex (FR); DE, ALMEIDA, Luis, Filipe, 78084 Guyancourt cedex (FR); GIRAULT, Edouard, 78084 Guyancourt cedex (FR)
(74) Mandataire: Renault Group
(86) Numéro de dépôt international: PCT/EP2021/076668
(87) Numéro de publication internationale: WO 2022/089863

(56) Documents cités:
- EP-A1- 2 399 807
- DE-A1- 102006 041 099
- DE-U1- 202018 104 149
- JP-A- 2017 190 102
- US-A1- 2020 070 893

## Description

La présente invention concerne le domaine des véhicules automobiles, et notamment les éléments transversaux ou traverses s'étendant transversalement à l'axe longitudinal du véhicule automobile.

Plus particulièrement, la présente invention concerne les trains avant de véhicule automobile comprenant un organe de suspension reposant sur une coupelle d'amortisseur.

Généralement, la coupelle d'amortisseur est solidaire d'un essieu comprenant deux longerons reliés transversalement par une traverse.

Il est également connu de disposer une traverse du côté de l'habitacle, sous la forme d'une poutre tubulaire s'étendant transversalement dans le poste de conduite du véhicule automobile. La traverse de poste de conduite permet la fixation de plusieurs éléments du poste de conduite, comme la planche de bord, le système HVAC de ventilation, chauffage et climatisation, la colonne de direction du véhicule, la boîte à gants, etc...

Ces traverses sont réalisées par déformation d'un tube à froid ou à chaud. Leur obtention nécessite l'utilisation d'acier présentant des caractéristiques mécaniques élevées.

Toutefois, leur structure ne permet pas de dissocier les inerties de flexion et de torsion et leur procédé de fabrication est complexe et nécessite de nombreuses étapes parmi lesquelles un emboutissage, un traitement thermique, un clinchage et un grenaillage.

De plus, la raideur anti devers que présente ce type de traverse est très sensible à la forme et à la délimitation de la longueur de la traverse.

On connaît également les traverses comprenant une pluralité de tronçons soudés entre eux et fixées à la caisse du véhicule par l'intermédiaire d'un dispositif de fixation solidaire de ladite traverse à chacune de ses extrémités.

Toutefois, les soudures entre les tronçons de tubes induisent un risque élevé de fissuration au niveau des soudures.

Le document JP 2017 190102 A décrit un train avant de véhicule selon le préambule de la revendication 1.

Il existe un besoin d'optimiser les traverses de véhicule automobile capables de répondre aux exigences élevées en matière de rigidité et de capacité d'absorption des chocs.

L'objectif de l'invention est donc de pallier les inconvénients précités et de proposer une traverse de véhicule automobile de forme optimisée dans le but d'être plus léger, plus ergonomique et à coût réduit, tout en assurant la sécurité des passagers en cas de choc frontal.

La présente invention a pour objet un train avant de véhicule automobile selon la revendication 1.

Ainsi, la traverse anti-rapprochement permet de garantir la raideur d'accueil dynamique des coupelles d'amortisseurs.

Selon l'invention, la traverse est monobloc. Par exemple, les interfaces de fixation à la caisse du véhicule comprennent au moins un orifice pour le passage d'un élément de visserie et les interfaces de fixation aux coupelles d'amortisseurs comprennent au moins un orifice pour le passage d'un élément de visserie. En variante, on pourrait prévoir un nombre d'orifices supérieur ou égal à deux.

Selon l'invention, la traverse comprend au moins une patte de fixation en saillie à partir de la partie centrale dans la direction opposée à l'habitacle du véhicule et formant une interface de support pour un dispositif de charge d'une batterie d'un groupe motopropulseur.

La traverse anti-rapprochement a ainsi également pour fonction de garantir la raideur dynamique du dispositif de charge.

Selon un mode de réalisation, la traverse comprend deux paires de pattes de fixation du dispositif de charge, chaque paire de pattes de fixation comprenant un évidement de matière coopérant avec un support de forme correspondante solidaire du dispositif de charge.

Selon un mode de réalisation, la traverse comprend au moins une patte de fixation en saillie à partir de la partie centrale et formant une interface de support pour une unité de chauffage de type HVAC.

Les pattes de fixation du dispositif de charge et de l'unité de chauffage peuvent être confondues ou distinctes.

Par exemple, la partie centrale comprend une pluralité de parties en saillie vers l'habitacle du véhicule.

De telles parties en saillie sont découpées pour s'adapter à la forme d'autres composants du véhicule automobile.

En variante, on pourrait prévoir que la face arrière présente d'autres formes découpées afin de s'adapter à tous les types de véhicules automobiles.

Chacune des extrémités peut comprendre une interface de fixation d'une boîte à eau et/ou une interface de fixation d'un mécanisme d'essui glace.

La face inférieure de la partie centrale de la traverse peut comprendre une pluralité de nervures de rigidification.

Selon un autre aspect, l'invention concerne un véhicule automobile comprenant un train avant tel que décrit précédemment.

D'autres buts, caractéristiques et avantages de l'invention apparaîtront à la lecture de la description suivante, donnée uniquement à titre d'exemple non limitatif, et faite en référence aux figures annexées sur lesquelles :
[Fig 1] est une vue schématique en perspective d'une partie de train avant d'un véhicule automobile comprenant une traverse selon un mode de réalisation de l'invention ;

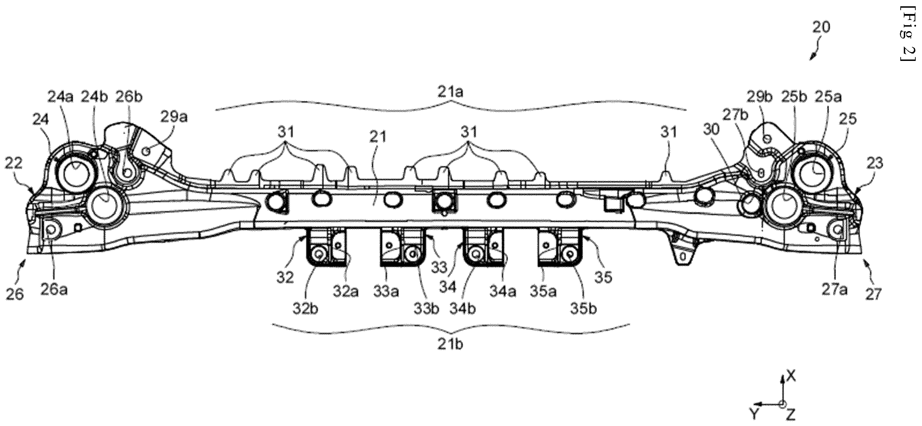

[Fig 2] est une vue de dessus de la traverse de la figure 1 ; et
[Fig 3] est une vue de dessous de la traverse de la figure 1.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y.

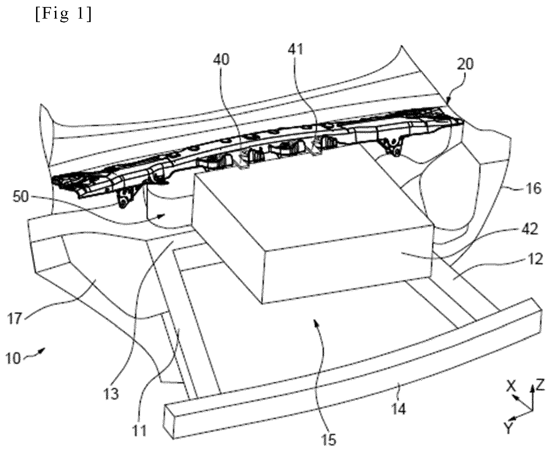

La figure 1 représente une partie d'un train avant 10 d'un véhicule automobile comprenant un essieu comprenant deux bras longitudinaux 11, 12 reliés par une première traverse transversale 13 et délimitant avec une traverse 14 de pare-chocs avant et la caisse 16 du véhicule, le compartiment moteur 15. Les bras 11, 12 relient la caisse du véhicule (non représentée) à des supports de roues (non représentées).

Le compartiment moteur 15 est séparé de l'habitacle du véhicule automobile (non référencé) par une paroi 17 ou tablier s'étendant dans le plan YZ.

On entend par direction « transversale », une direction perpendiculaire à la direction longitudinale X du véhicule.

La partie de train avant 10 comprend en outre deux organes de suspension, tels que des amortisseurs ou ressorts de suspension (non représentés) reliés chacun à une roue avant du véhicule par une de leurs extrémités et à un support ou coupelle d'appui (non représentée) par l'autre de leurs extrémités.

La partie de train avant 10 comprend une traverse anti-rapprochement 20 s'étendant dans le compartiment moteur 15 transversalement entre les coupelles d'appui des amortisseurs.

La traverse anti-rapprochement 20 est réalisée en aluminium de fonderie. La traverse anti-rapprochement 20 présente la forme d'une plaque de dimension verticale inférieure à la dimension longitudinale.

En effet, les architectures actuelles des compartiments moteurs des véhicules à propulsion électrique ne permettent pas d'intégrer une traverse tubulaire entre les deux coupelles d'amortisseurs.

La traverse anti-rapprochement 20 comprend une partie centrale 21 et deux extrémités latérales 22, 23.

La traverse anti-rapprochement 20 est fixée, par visseries, à ses deux extrémités 22, 23, à la caisse du véhicule et respectivement à une coupelle d'appui des amortisseurs. Ladite traverse permet ainsi de garantir la raideur d'accueil dynamique des coupelles d'amortisseurs.

Chacune des extrémités 22, 23 comprend une interface 24, 25 de fixation à la caisse du véhicule et une interface 26, 27 de fixation aux coupelles d'amortisseurs.

Tel qu'illustré, les interfaces 24, 25 de fixation à la caisse du véhicule comprennent deux orifices 24a, 24b et 25a, 25b pour le passage d'un élément de visserie. En variante, on pourrait prévoir un nombre d'orifice différent de deux par extrémités, par exemple supérieur ou égal à trois.

Tel qu'illustré, les interfaces 26, 27 de fixation aux coupelles d'amortisseurs comprennent deux orifices 26a, 26b et 27a, 27b pour le passage d'un élément de visserie. En variante, on pourrait prévoir un nombre d'orifices différent de deux par extrémités, par exemple supérieur ou égal à trois.

De manière nullement limitative, chacune des extrémités 22, 23 comprend une interface 29a, 29b de fixation d'une boîte à eau (non représentée), ainsi qu'une interface 30 de fixation d'un mécanisme d'essui glace (non représenté).

La partie centrale 21 de la traverse anti-rapprochement 20 est délimitée par une face arrière 21a située du côté vers l'habitacle du véhicule et une face avant 21b située du côté opposé à la face arrière 21a, à l'écart de l'habitacle du véhicule.

Tel qu'illustré, la face arrière 21a comprend une pluralité de parties en saillie 31 vers l'habitacle du véhicule espacées entre elles. Lesdites parties en saillie 31 sont destinées à coopérer avec le tablier du véhicule automobile.

De telles parties en saillie sont découpées pour s'adapter à la forme d'autres composants du véhicule automobile.

En variante, on pourrait prévoir que la face arrière 21a présente d'autres formes découpées afin de s'adapter à tous les types de véhicules automobiles.

Tel qu'illustré, la face avant 21b de la traverse 20 comprend des pattes de fixation 32, 33, 34, 35, ici au nombre de quatre.

Les pattes de fixation sont en saillie à partir de la face avant 21b. Ces pattes de fixation peuvent être en saillie dans la direction opposée à l'habitacle du véhicule. Dans une variante de réalisation non illustrée, lesdits pattes de fixation peuvent être en saillie dans la direction opposée.

Chaque paire de pattes de fixation 32, 33 ; 34, 35 comprend un évidement de matière 32a, 33a ; 34a, 35a destiné à recevoir un support 40, 41 de forme correspondante solidaire d'un dispositif de charge 42 de la batterie du groupe motopropulseur.

La traverse anti-rapprochement 20 a ainsi également pour fonction de garantir la raideur dynamique du dispositif de charge 42.

Les supports 40, 41 du dispositif de charge 42 sont configurés pour se rompre en cas de choc frontal sur le véhicule automobile et ainsi diriger le dispositif de charge dans une direction verticale et non longitudinale.

Chacune des pattes de fixation 32, 33 ; 34, 35 comprend une interface 32b, 33b ; 34b, 35b de fixation à une unité de chauffage de type HVAC 50.

En variante, on pourrait prévoir qu'une des paires de pattes de fixation comprenne une interface de fixation de l'unité de chauffage 50.

Ainsi, l'unité de chauffage 50 se trouve dans le compartiment moteur 15 et plus dans l'habitacle du véhicule comme c'est le cas dans les véhicules automobile connus.

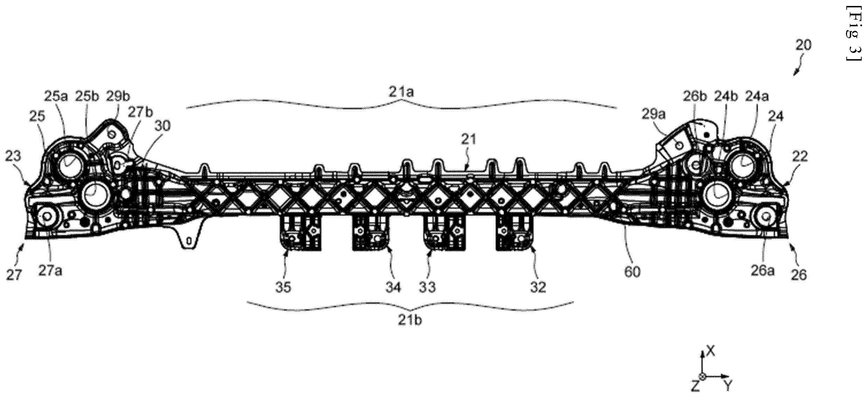

Tel qu'illustré en détails sur la figure 3, la traverse anti-rapprochement 20 comprend une pluralité de nervures de rigidification 60, notamment prévue sur la partie centrale 21 de la traverse.

Les nervures 60 sont ici à contours fermés.

En variante, on pourrait prévoir d'autres formes de nervures de rigidification 60.

Telle qu'illustrée, la traverse anti-rapprochement 20 n'est pas symétrique par rapport à l'axe longitudinal X.

La traverse anti-rapprochement 20 est une pièce monobloc, sensiblement plane et non extrudée.

La traverse anti-rapprochement 20 est avantageusement réalisée par moulage d'aluminium dans un moule de fonderie puis redécoupée pour pouvoir s'adapter à un nombre important de véhicules automobiles.

Ainsi, à partir d'un seul moule, il est possible de réaliser une traverse anti-rapprochement modulaire pour s'adapter à plusieurs véhicules.

La traverse anti-rapprochement 20 permet de supporter une pluralité de composants mécaniques du véhicule automobile, tel que notamment, mais non exclusivement, les coupelles d'amortisseur, le dispositif de charge et l'unité de chauffage, et ce tout en conservant une raideur dynamique des éléments et en réduisant les coûts de fabrication de la traverse.

## Revendications

1. Train avant (10) de véhicule automobile comprenant un compartiment moteur (15) délimité par deux bras longitudinaux (11, 12), au moins une première traverse transversale (13) reliant lesdits bras et une caisse (16) du véhicule, le train avant comprenant deux organes de suspension reliés chacun à une roue avant du véhicule par une de leurs extrémités et à une coupelle d'appui par l'autre de leurs extrémités, le train avant comprenant une traverse anti-rapprochement (20) monobloc réalisée en aluminium de fonderie et s'étendant dans le compartiment moteur (15) transversalement entre les coupelles d'appui des amortisseurs, ladite traverse (20) comprenant une partie centrale (21) et deux extrémités latérales (22, 23), chacune desdites extrémités (22, 23) comprenant une interface (24, 25) de fixation à la caisse du véhicule et une interface (26, 27) de fixation aux coupelles d'amortisseurs, **caractérisé en ce que** : le train avant comprend une batterie comprenant un dispositif de charge (42), et **en ce que** la traverse anti-rapprochement (20) comprend au moins une patte de fixation (32, 33, 34, 35) en saillie à partir de la partie centrale (21) dans la direction opposée à l'habitacle du véhicule et formant une interface de support pour le dispositif de charge (42) de la batterie du groupe motopropulseur.

2. Train avant selon la revendication 1, dans lequel les interfaces (24, 25) de fixation à la caisse du véhicule comprennent au moins un orifice (24a, 24b ; 25a, 25b) pour le passage d'un élément de visserie et les interfaces (26, 27) de fixation aux coupelles d'amortisseurs comprennent au moins un orifice (26a, 26b ; 27a, 27b) pour le passage d'un élément de visserie.

3. Train avant selon la revendication 1 ou 2, dans lequel la traverse anti-rapprochement (20) comprend deux paires de pattes de fixation (32, 33, 34, 35) du dispositif de charge (42), chaque paire de pattes de fixation (32, 33 ; 34, 35) comprenant un évidement de matière (32a, 33a ; 34a, 35a) coopérant avec un support (40, 41) de forme correspondante solidaire du dispositif de charge (42).

4. Train avant selon l'une quelconque des revendications précédentes, comprenant une unité de chauffage (50) disposée dans le compartiment moteur (15) et dans lequel la traverse anti-rapprochement (20) comprend au moins une patte de fixation (32, 33, 34, 35) en saillie à partir de la partie centrale (21) et formant une interface de support pour l'unité de chauffage (50).

5. Train avant selon l'une quelconque des revendications précédentes, dans lequel la partie centrale (21) de la traverse anti-rapprochement (20) comprend une pluralité de parties en saillie (31) vers l'habitacle du véhicule configurées pour coopérer avec un tablier du véhicule.

6. Train avant selon l'une quelconque des revendications précédentes, dans lequel chacune des extrémités (22, 23) de la traverse anti-rapprochement (20) comprend une interface (29a, 29b) de fixation d'une boîte à eau et/ou une interface (30) de fixation d'un mécanisme d'essui glace.

7. Véhicule automobile comprenant un train avant selon l'une quelconque des revendications précédentes.

## Patentansprüche

1. Vorderachse (10) eines Kraftfahrzeugs, welche einen Motorraum (15) umfasst, der von zwei Längslenkern (11, 12) begrenzt wird, wobei mindestens ein erster Querholm (13) diese Lenker und eine Karosserie (16) des Fahrzeugs verbindet, wobei die Vorderachse zwei Aufhängungselemente umfasst, die jeweils durch eines ihrer Enden mit einem Vorderrad des Fahrzeugs und durch das andere ihrer Enden mit einem Stützteller verbunden sind, wobei die Vorderachse
eine einstückige Domstrebe (20) umfasst, die aus Aluminiumguss hergestellt ist und sich im Motorraum (15) quer zwischen den Stütztellern der Dämpfer erstreckt, wobei diese Strebe (20) einen Mittelteil (21) und zwei seitliche Enden (22, 23) umfasst, wobei jedes der Enden (22, 23) eine Schnittstelle (24, 25) zur Befestigung an der Karosserie des Fahrzeugs und eine Schnittstelle (26, 27) zur Befestigung an den Dämpfertellern umfasst, **dadurch gekennzeichnet, dass** die Vorderachse eine Batterie umfasst, die eine Ladevorrichtung (42) umfasst, und dadurch, dass die Domstrebe (20) mindestens eine Befestigungslasche (32, 33, 34, 35) umfasst, die vom Mittelteil (21) aus in der zum Innenraum des Fahrzeugs entgegengesetzten Richtung vorsteht und eine Halteschnittstelle für die Ladevorrichtung (42) der Batterie des Antriebsstranges bildet.

2. Vorderachse nach Anspruch 1, wobei die Schnittstellen (24, 25) zur Befestigung an der Karosserie des Fahrzeugs mindestens eine Öffnung (24a, 24b; 25a, 25b) für den Durchgang eines Schraubenelements umfassen und die Schnittstellen (26, 27) zur Befestigung an den Dämpfertellern mindestens eine Öffnung (26a, 26b; 27a, 27b) für den Durchgang eines Schraubenelements umfassen.

3. Vorderachse nach Anspruch 1 oder 2, wobei die Domstrebe (20) zwei Paare von Befestigungslaschen (32, 33, 34, 35) für die Ladevorrichtung (42) umfasst, wobei jedes Paar von Befestigungslaschen (32, 33; 34, 35) eine Materialaussparung (32a, 33a; 34a, 35a) umfasst, die mit einem Halter (40, 41) von entsprechender Form zusammenwirkt, der mit der Ladevorrichtung (42) fest verbunden ist.

4. Vorderachse nach einem der vorhergehenden Ansprüche, welche eine Heizeinheit (50) umfasst, die im Motorraum (15) angeordnet ist, und wobei die Domstrebe (20) mindestens eine Befestigungslasche (32, 33, 34, 35) umfasst, die vom Mittelteil (21) aus vorsteht und eine Halteschnittstelle für die Heizeinheit (50) bildet.

5. Vorderachse nach einem der vorhergehenden Ansprüche, wobei der Mittelteil (21) der Domstrebe (20) mehrere zum Innenraum des Fahrzeugs hin vorstehende Teile (31) umfasst, die dafür ausgelegt sind, mit einer Spritzwand des Fahrzeugs zusammenzuwirken.

6. Vorderachse nach einem der vorhergehenden Ansprüche, wobei jedes der Enden (22, 23) der Domstrebe (20) eine Schnittstelle (29a, 29b) zur Befestigung eines Wasserbehälters und/oder eine Schnittstelle (30) zur Befestigung eines Scheibenwischermechanismus umfasst.

7. Kraftfahrzeug, welches eine Vorderachse nach einem der vorhergehenden Ansprüche umfasst.

## Claims

1. Front axle assembly (10) for a motor vehicle comprising an engine compartment (15) delimited by two longitudinal arms (11, 12), at least a first transverse crossmember (13) connecting said arms, and a body (16) of the vehicle, the front axle assembly comprising two suspension members each connected to a front wheel of the vehicle via one of their ends and to a supporting cup via the other of their ends, the front axle assembly
comprising a one-piece strut tower brace crossmember (20) made of cast aluminium and extending transversely in the engine compartment (15) between the supporting cups of the shock absorbers, said crossmember (20) comprising a central part (21) and two lateral ends (22, 23), each of said ends (22, 23) comprising an interface (24, 25) for fixing to the body of the vehicle and an interface (26, 27) for fixing to the shock absorber cups, **characterized in that**: the front axle assembly comprises a battery comprising a charging device (42), and **in that** the strut tower brace crossmember (20) comprises at least one fixing lug (32, 33, 34, 35) projecting from the central part (21) in the direction away from the vehicle interior and forming a support interface for the charging device (42) for the battery of the powertrain.

2. Front axle assembly according to Claim 1, wherein the interfaces (24, 25) for fixing to the body of the vehicle comprise at least one orifice (24a, 24b; 25a, 25b) for the passage of a screw-fastening element and the interfaces (26, 27) for fixing to the shock absorber cups comprise at least one orifice (26a, 26b; 27a, 27b) for the passage of a screw-fastening element.

3. Front axle assembly according to Claim 1 or 2, wherein the strut tower brace crossmember (20) comprises two pairs of fixing lugs (32, 33, 34, 35) for fixing the charging device (42), each pair of fixing lugs (32, 33; 34, 35) comprising a material recess (32a, 33a; 34a, 35a) cooperating with a support (40, 41) of corresponding shape secured to the charging device (42).

4. Front axle assembly according to any one of the preceding claims, comprising a heating unit (50) arranged in the engine compartment (15) and wherein the strut tower brace crossmember (20) comprises at least one fixing lug (32, 33, 34, 35) projecting from the central part (21) and forming a support interface for the heating unit (50).

5. Front axle assembly according to any one of the preceding claims, wherein the central part (21) of the strut tower brace crossmember (20) comprises a plurality of projecting parts (31) which project towards the vehicle interior and are configured to cooperate with a bulkhead of the vehicle.

6. Front axle assembly according to any one of the preceding claims, wherein each of the ends (22, 23) of the strut tower brace crossmember (20) comprises an interface (29a, 29b) for fixing a water box and/or an interface (30) for fixing a windscreen wiper mechanism.

7. Motor vehicle comprising a front axle assembly according to any one of the preceding claims.
